# EUROPÄISCHE PATENTANMELDUNG

(11) **EP 2 295 890 A2**
(43) Veröffentlichungstag der Anmeldung: **16.03.2011**
(21) Anmeldenummer: 10171582.9
(22) Anmeldetag: 02.08.2010
(51) Int. Cl.: F24H 8/00, F23J 15/02, F28F 17/00

(54) **Siphon für ein Heizgerät**

(30) Priorität: 05.08.2009 DE 202009010606 U
(71) Anmelder: Robert Bosch GmbH, 70442 Stuttgart (DE)
(72) Erfinder: Etrich, Thomas, 35578 Wetzlar (DE)

(57) **Zusammenfassung**

Die Erfindung betrifft einen Siphon für ein Heizgerät zur Brennwertnutzung durch kondensierenden Betrieb, mit einem öl- oder gasbefeuerten Gebläsebrenner, einer Abgasleitung sowie einer Kondenswasserleitung mit Anschluss an den Siphon, welcher eine Kammer (2), einen Zulauf (3), sowie einen Stutzen (4) zum Anschließen einer Ablaufleitung zur Kanalisation aufweist. Der Erfindung liegt die Aufgabe zu Grunde, bei einem Heizgerät das Entweichen von Abgas über den Kondenswasser-Ablaufweg in einen Aufstellraum über einen Siphon zu vermeiden. Gekennzeichnet ist der Siphon für ein Heizgerät dadurch, dass die Kammer mindestens teilweise mit feinkörnigem Schüttgut gefüllt ist. Dabei erstreckt sich die Füllung mit Schüttgut etwa bis auf das Höhenniveau des Zulaufs zur Kammer.

## Beschreibung

Die Erfindung betrifft einen Siphon für ein Heizgerät zur Brennwertnutzung durch kondensierenden Betrieb nach dem Oberbegriff des Patentanspruches 1.

Derartige Heizgeräte besitzen einen öl- oder gasbefeuerten Gebläsebrenner, eine direkt an das Gebläse angeschlossene Verbrennungsluftzuführungsleitung, eine Abgasleitung sowie eine Kondenswasserleitung für das aus einem Wärmetauscher austretende, bei der Abkühlung der Heizgase entstehende Kondenswasser. In die Kondenswasserleitung ist in der Regel dicht am Heizgerät ein Siphon eingebaut, um einen Abgasaustritt zu verhindern. Dieser weist üblicherweise eine Kammer mit einer Wasservorlage, einen Zulauf, einen Stutzen zum Anschließen einer Ablaufleitung zur Kanalisation und einen nach oben gerichteten Entlüftungsstutzen auf.

Die Heizgeräte kommen vermehrt mit einer raumluftunabhängigen Verbrennungsluftzuführung zum Einsatz. Sie sind dann mit einer kombinierten Luft-/Abgas-Leitung versehen, wobei die Verbrennungsluftzuführungsleitung direkt an das Gebläse angeschlossen ist. Dadurch wird eine Aufstellung der Geräte an vielen Orten eines Gebäudes, beispielsweise auch in Wohnräumen, möglich. Aus diesem Grund müssen im Betrieb sowie bei Wartungsarbeiten Geruchsbelästigungen ausgeschlossen werden, die möglicherweise durch die Verwendung des Brennstoffes Heizöl oder durch geringfügige Abgasaustritte entstehen können. Im zweiten Fall sind auch Sicherheitsbestimmungen zu beachten.

Aus dem Stand der Technik sind Siphons mit Schwimmern bekannt, aber auch dass diese möglicherweise verkleben, weil es im Laufe der Betriebszeit zu Ablagerungen an den zugeordneten Oberflächen kommt. Weiterhin kann es sein, dass die Wasservorlage in Siphons in ungünstigen Betriebszuständen mit kurzen Druckstößen, zum Beispiel bei Starts, ausgeblasen wird.

Bei der Inbetriebnahme eines Brennwert-Heizgerätes ist es möglich, das in einem Siphon zunächst kein Wasser angesammelt ist, und dass geringe Abgasmengen über die nur wasserdicht ausgeführte Ablaufleitung austreten können. Es sind dabei nur wenige Minuten Betriebszeit nötig, bis im Siphon die Sperrwirkung wieder hergestellt ist, also bis genügend Kondenswasser gebildet und im Siphon gesammelt ist. Eine Befüllung des relativ kompakten Kunststoffgehäuses von Hand ist nicht vorgesehen oder wäre nur mit einem Lösen von Leitungsverbindungen möglich. Die Austrocknung eines Siphons tritt besonders in Anlagen mit langen Stillstandszeiten auf, beispielsweise verursacht durch nur zeitweisen Wärmebedarf oder durch in das Heizsystem integrierte Solaranlagen oder Biomasse-Kessel, welche die Wärmebereitstellung vollständig übernehmen können, so dass das Heizgerät über viele Wochen nicht laufen muss. Andererseits aber auch in Anlagen mit hohen Systemtemperaturen, bei denen kein Kondenswasser entsteht.

Der Erfindung liegt die Aufgabe zu Grunde, bei einem Heizgerät das Entweichen von Abgas über den Kondenswasser-Ablaufweg in einen Aufstellraum über einen Siphon zu vermeiden.

Erfindungsgemäß wurde dies mit den Merkmalen des Patentanspruches 1 gelöst. Vorteilhafte Weiterbildungen sind den Unteransprüchen zu entnehmen.

Gekennzeichnet ist der Siphon für ein Heizgerät dadurch, dass die Kammer mindestens teilweise mit feinkörnigem Schüttgut gefüllt ist. Dabei erstreckt sich die Füllung mit Schüttgut etwa bis auf das Höhenniveau des Zulaufs zur Kammer.

Im Bereich der Ausmündung aus der Kammer, insbesondere vor und/oder im Stutzen zum Anschließen einer Ablaufleitung ist ein Mittel zum Zurückhalten des Schüttgutes angeordnet. In vorteilhaften Ausführungsformen besteht dieses Mittel zum Zurückhalten des Schüttgutes aus einem kondenswasserbeständigen Schaumstoff, einem Gewebe, einem Vlies und/oder einem Sieb. Auch können Kombinationen der vorstehenden Varianten zum Einsatz kommen. Als Schüttgut ist in einer bevorzugten Ausführungsform Sand, insbesondere Quarzsand, vorgesehen. Vorzugsweise mündet der Stutzen zum Anschließen einer Ablaufleitung auf einem gleichen oder tieferen Niveau als der Zulauf aus der Kammer aus.

Mit der Erfindung wird bei einem Heizgerät das Entweichen von Abgas in den Aufstellraum über die Kondenswasserleitung, im Falle eines ausgetrockneten Siphons, sicher vermieden. Die Vorlage aus Sand verhindert durch die relativ hohe Schüttdichte einerseits das Austreten von Abgasen, lässt andererseits aber entstehendes Kondenswasser abfließen. Auch Anfahr-Druckstöße werden durch die Füllung gut aufgefangen. Es ist keinerlei Schwimmer oder Mechanik mehr erforderlich, so dass Herstellung und Wartung einfach und preiswert sind. Zum Beispiel kann die Schüttgutfüllung in den üblichen Wartungsintervallen einer Sichtprüfung auf Verschmutzung unterzogen werden, so dass bei erkennbarer Verschmutzung lediglich das Schüttgut ausgetauscht werden muss.

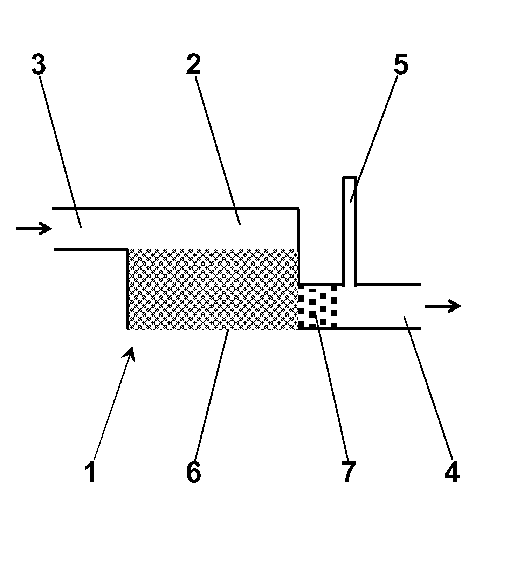

Die Zeichnung stellt ein Ausführungsbeispiel der Erfindung dar und zeigt in einer einzigen Figur schematisch in einem Längsschnitt den erfindungsgemäßen Prinzip-Aufbau eines Siphons für ein Heizgerät.

Der Siphon 1 besitzt eine Kammer 2 mit einem mit einer nicht dargestellten Abgasleitung verbindbaren Zulauf 3, einem Stutzen 4 zum Anschließen einer Ablaufleitung zur Kanalisation sowie einem Entlüftungsstutzen 5.

Die Kammer 2 ist teilweise mit feinkörnigem Schüttgut 6 gefüllt, wobei im Bereich der Ausmündung aus der Kammer 2, hier im Übergangsbereich zwischen Kammer 2 und Stutzen 4 gezeichnet, ein Mittel 7 zum Zurückhalten des Schüttgutes 6 angeordnet ist.

## Patentansprüche

1. Siphon (1) für ein Heizgerät zur Brennwertnutzung durch kondensierenden Betrieb, mit einem öl- oder gasbefeuerten Gebläsebrenner, einer Abgasleitung sowie einer Kondenswasserleitung mit Anschluss an den Siphon, welcher eine Kammer (2), einen Zulauf (3), sowie einen Stutzen (4) zum Anschließen einer Ablaufleitung zur Kanalisation aufweist, **dadurch gekennzeichnet, dass** die Kammer (2) mindestens teilweise mit feinkörnigem Schüttgut (6) gefüllt ist.

2. Siphon (1) nach Anspruch 1,
**dadurch gekennzeichnet, dass** die Füllung mit Schüttgut (6) sich etwa bis auf das Höhenniveau des Zulaufs (3) zur Kammer (2) erstreckt.

3. Siphon (1) nach den Ansprüchen 1 oder 2,
**dadurch gekennzeichnet, dass** im Bereich der Ausmündung aus der Kammer (2), insbesondere vor und/oder im Stutzen (4) zum Anschließen einer Ablaufleitung ein Mittel (7) zum Zurückhalten des Schüttgutes (6) angeordnet ist.

4. Siphon (1) nach einem der Ansprüche 1 bis 3,
**dadurch gekennzeichnet, dass** das Mittel (7) zum Zurückhalten des Schüttgutes (6) aus einem kondenswasserbeständigen Schaumstoff, einem Gewebe, einem Vlies und/oder einem Sieb oder einer Kombination dergleichen besteht.

5. Siphon (1) nach einem der Ansprüche 1 bis 4,
**dadurch gekennzeichnet, dass** als Schüttgut (6) Sand, insbesondere Quarzsand, vorgesehen ist.

6. Siphon (1) nach einem der Ansprüche 1 bis 5,
**dadurch gekennzeichnet, dass** der Stutzen (4) zum Anschließen einer Ablaufleitung auf einem gleichen oder tieferen Niveau als der Zulauf (3) aus der Kammer (2) ausmündet.
